# EUROPEAN PATENT APPLICATION

(11) **EP 4 187 436 A1**
(43) Date of publication of application: **31.05.2023**
(21) Application number: 21845946.9
(22) Date of filing: 22.07.2021
(51) Int. Cl.: G06K 9/00, G09F 9/30

(54) **DISPLAY ASSEMBLY AND DISPLAY DEVICE**

(30) Priority: 23.07.2020 CN 202010716864
(71) Applicant: Vivo Mobile Communication Co., Ltd., Dongguan, Guangdong 523863 (CN)
(72) Inventor: CHENG, Tong, Dongguan, Guangdong 523863 (CN); LIN, Huaxin, Dongguan, Guangdong 523863 (CN)
(74) Representative: Murgitroyd & Company
(86) International application number: PCT/CN2021/107889
(87) International publication number: WO 2022/017470

(57) **Abstract**

A display assembly and a display device belong to the field of communications technologies. The display assembly includes: a display panel (10); a diverging component (30), where the diverging component (30) is disposed on a side of the display panel (10) in a width direction; an emitting module, disposed on a non-display side of the display panel (10) and configured to emit light to the diverging component (30); a receiving module (40), disposed on the non-display side of the display panel (10) and configured to receive reflected light that is generated by reflecting diverged light of the diverging component (30) by a detection target (70); and a cover plate (20), disposed on a display side of the display panel (10), where a stretching structure is formed on one of the cover plate (20) and the diverging component (30), the stretching structure is located on the side of the display panel (10) in the width direction, and the stretching structure stretches light emitted by the diverging component (30) in the width direction of the display panel (10).

## Description

### CROSS-REFERENCE TO RELATED APPLICATIONS

This application claims priority to Chinese Patent Application No. 202010716864.9 filed on July 23, 2020, which is incorporated herein by reference in its entirety.

### TECHNICAL FIELD

This application belongs to the field of communications technologies, and specifically, relates to a display assembly and a display device.

### BACKGROUND

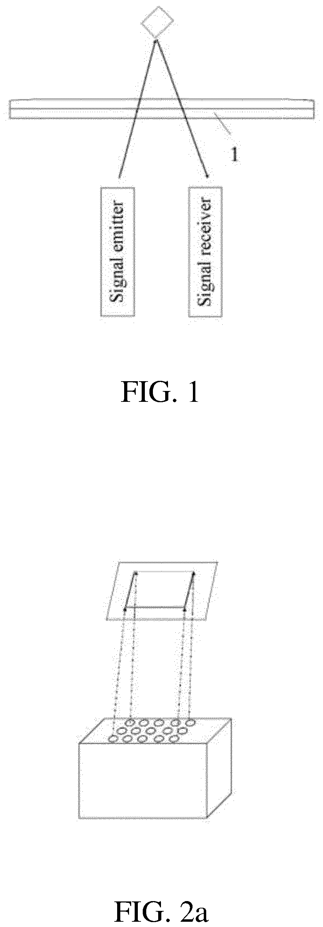

With the development of mobile intelligent terminals, a 3D sensing technology gradually becomes one of standard configured hardware of smartphones. The time of flight (Time of flight, TOF) is quite widely applied. In smartphones, the TOF is applied to physical distance measurement, 3D modeling, an improvement of photographing performance, and the like. Currently, as shown in FIG. 1, when an under-display TOF design is used, a laser signal emitted by a signal emitter needs to pass through a display screen 1 twice before being received by a signal receiver. A transmittance of the display screen 1 has a relatively large impact on TOF imaging, and the laser signal of a TOF detection target passes through the display screen twice. As a result, obvious attenuation of the laser signal occurs twice, and laser energy utilization is quite low. Because TOF laser energy is high, when infrared laser illuminates a display area of the display screen from a back side, an organic light-emitting material for display pixels of an illumination area ages severely, and obvious chromatic aberration occurs in a display effect of the illumination area, resulting in a severe quality problem.

### SUMMARY

An objective of embodiments of this application is to provide a display assembly and a display device, which may resolve a problem that when an under-display TOF design is used, a laser signal loses severely, and laser utilization is low, easily causing damages to an organic light-emitting material in an illumination area.

To resolve the foregoing technical problem, this application is implemented as follows.

According to a first aspect, an embodiment of this application provides a display assembly, including:
a display panel;
a diverging component, where the diverging component is disposed on a side of the display panel in a width direction;
an emitting module, where the emitting module is disposed on a non-display side of the display panel, and the emitting module is configured to emit light to the diverging component;
a receiving module, where the receiving module is disposed on the non-display side of the display panel, and the receiving module is configured to receive reflected light that is generated by reflecting diverged light of the diverging component by a detection target; and
a cover plate, where the cover plate is disposed on a display side of the display panel, a stretching structure is formed on one of the cover plate and the diverging component, and the stretching structure is located on the side of the display panel in the width direction and configured to stretch light emitted by the diverging component in the width direction of the display panel.

A first groove is disposed on the cover plate to form the stretching structure, a bottom wall of the first groove is an arc surface, and the first groove is located in a position on the cover plate that corresponds to the diverging component;
the first groove is located on a side of the cover plate that is distant from the display panel, and an opening of the first groove faces away from the diverging component; or the first groove is located on a side of the cover plate that is close to the display panel, and an opening of the first groove faces the diverging component.

A second groove is disposed on a side of the diverging component that is close to the cover plate to form the stretching structure, a bottom wall of the second groove is an arc surface, and an opening of the second groove faces the cover plate.

The emitting module includes:
a light source, configured to emit light; and
a light collimator, where the light emitted by the light source is casted to the light collimator, and collimated light emitted by the light collimator is casted to the diverging component.

The emitting module further includes:
an optical structure, where the optical structure adjusts a transmission direction of the collimated light emitted by the light collimator, and the collimated light with an adjusted transmission direction is casted to the diverging component.

The optical structure is triangular prism-shaped.

The display assembly further includes:
a frame, where the optical structure is disposed on the frame, and the cover plate is connected to the frame.

The emitting module further includes:
a housing structure, where the light source and the light collimator are encapsulated in the housing structure.

A non-display area of the cover plate is coated with an ink layer, and the ink layer is capable of transmitting the light emitted by the emitting module.

According to a second aspect, an embodiment of this application provides a display device, including the display assembly described in the foregoing embodiment.

In the display assembly of this embodiment of this application, the diverging component is disposed on a side of the display panel in a width direction; an emitting module is disposed on a non-display side of the display panel, where the emitting module is configured to emit light to the diverging component; the receiving module is disposed on the non-display side of the display panel, where the receiving module is configured to receive reflected light that is generated by reflecting diverged light of the diverging component 30 by a detection target; and a cover plate is disposed on a display side of the display panel, where a stretching structure is formed on one of the cover plate and the diverging component, and the stretching structure is located on the side of the display panel in the width direction and configured to stretch light emitted by the diverging component in the width direction of the display panel. In the display assembly of this application, the light emitted by the emitting module to the diverging component is diverged by the diverging component, the stretching structure stretches the light emitted by the diverging component in the width direction of the display panel to form a light area with a relatively large angle, the light is diverged from a non-display area of the cover plate. As such, the light can be emitted without passing through the display panel, and loses of a light signal is then reduced, thereby improving light utilization, reducing damages to an organic light-emitting material caused when the light illuminates a display area, reducing chromatic aberration occurring in a display effect of an illumination area, and avoiding opening holes on the display panel. In addition, when the stretching structure stretches the light emitted by the diverging component in the width direction of the display panel, a relatively large light area may be implemented in a relatively narrow non-display area, and a width of the non-display area of the cover plate may be reduced, so as to implement a relatively narrow non-display bezel and improve product use experience.

### BRIEF DESCRIPTION OF THE DRAWINGS

FIG. 1 is a transmission path of a laser signal in the existing design;
FIG. 2a is a schematic diagram of a light shape formed by light emitted by a VCSEL chip;
FIG. 2b is a schematic diagram of a light shape formed by light emitted by an EEL chip;
FIG. 3a is a schematic diagram of a width of a non-display area;
FIG. 3b is another schematic diagram of a width of a non-display area;
FIG. 4 is a schematic structural diagram of a display assembly according to an embodiment of this application;
FIG. 5 is a schematic diagram of light transmission of a case that a first groove forms a stretching structure on a display panel;
FIG. 6 is a light shape diagram of light at different positions in FIG. 4;
FIG. 7 is another schematic structural diagram of a display assembly according to an embodiment of this application;
FIG. 8 is another schematic diagram of light transmission of a case that a first groove forms a stretching structure on a display panel;
FIG. 9 is still another schematic structural diagram of a display assembly according to an embodiment of this application;
FIG. 10 is a schematic diagram of a case that a second groove forms a stretching structure on a diverging component;
FIG. 11 is a light shape diagram of light at different positions in FIG. 9; and
FIG. 12 is a schematic diagram of a working process of an embodiment of this application.

Reference numerals of the accompanying drawings:
display panel 10;
cover plate 20; first groove 21;
diverging component 30; second groove 31;
receiving module 40;
light source 50; light collimator 51; optical structure 52; housing structure 53;
frame 60; and detection target 70.

### DETAILED DESCRIPTION

The following clearly and completely describes the technical solutions in embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and so on are intended to distinguish between similar objects but do not indicate a particular order or sequence. It should be understood that the data so used may be interchanged in an appropriate condition, so that the embodiments of this application can be implemented in an order other than those illustrated or described herein. In addition, "and/or" in this specification and the claims represents at least one of the connected objects. A character "/" generally indicates an "or" relationship between the associated objects.

The following describes a display assembly provided in the embodiments of this application in detail with reference to the accompanying drawings by using specific embodiments and application scenarios thereof.

A display assembly according to an embodiment of this application includes a display panel 10, a cover plate 20, a diverging component 30, an emitting module, and a receiving module 40. The diverging component 30 is disposed on a side of the display panel 10 in a width direction; the emitting module is disposed on a non-display side of the display panel 10, where the emitting module is configured to emit light to the diverging component 30; and the receiving module 40 is disposed on the non-display side of the display panel 10, where the receiving module 40 is configured to receive reflected light that is generated by reflecting diverged light of the diverging component 30 by a detection target. The cover plate 20 is disposed on a display side of the display panel 10. A stretching structure is formed on one of the cover plate 20 and the diverging component 30, and the stretching structure is located on the side of the display panel 10 in the width direction and configured to stretch light emitted by the diverging component 30 in the width direction of the display panel 10.

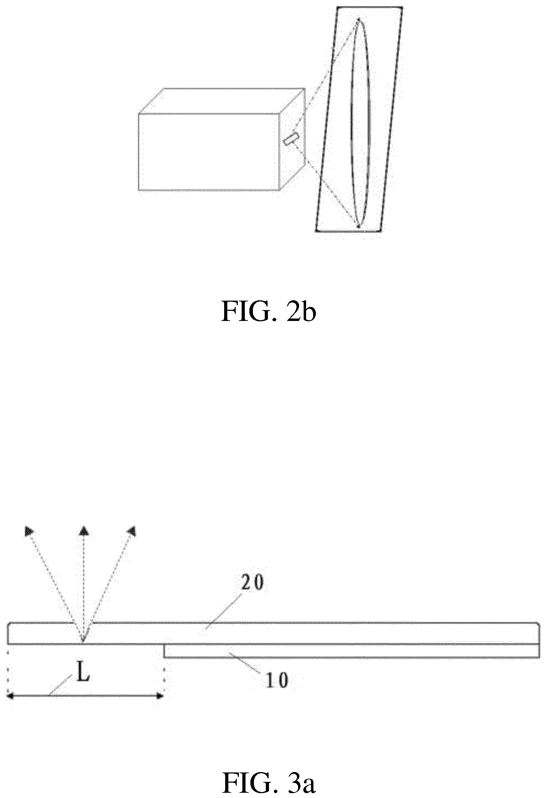

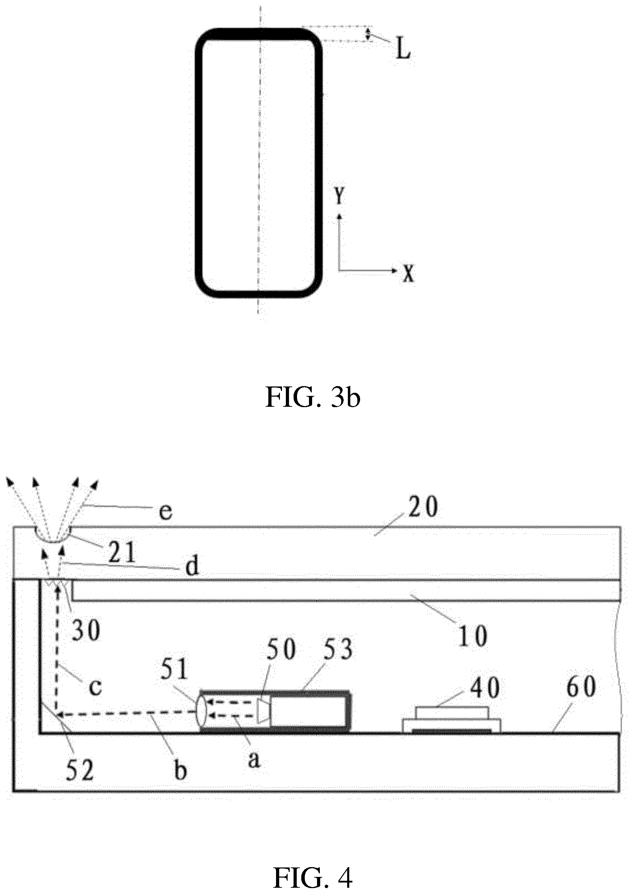

That is, the display assembly mainly includes the display panel 10, the cover plate 20, the diverging component 30, the emitting module, and the receiving module 40. The cover plate 20 may be a piece made of a transparent material, for example, a glass plate. The cover plate 20 may be disposed on the display side of the display panel 10, and the display panel 10 may be protected by using the cover plate 20. The diverging component 30 may be located on a side of the cover plate 20 that is close to the display panel 10, the diverging component 30 and the display panel 10 are located on a same side of the cover plate 20, and the diverging component 30 is disposed on the side of the display panel 10 in the width direction. As shown in FIG. 3b, the width direction may be an X-axis direction, or may be a Y-axis direction, for example, the diverging component 30 may be located in an area corresponding to a bezel. The diverging component 30 may be disposed in a non-display area of the cover plate 20, that is, the diverging component 30 is disposed in an area of the cover plate 20 that does not cover the display panel 10. For example, as shown in FIG. 3a, the diverging component 30 may be disposed in a top or side non-display area of the cover plate 20, so as to make it convenient for light to be emitted from the top or side non-display area of the cover plate 20.

The emitting module is disposed on the non-display side of the display panel 10, and the emitting module may be used for emitting light to the diverging component 30. The diverging component 30 may diverge the light incident to the diverging component 30, and the light emitted by the diverging component 30 may be emitted from the non-display area of the cover plate 20. The light has a relatively large angle by divergence of the diverging component 30, so as to make it convenient for the light to illuminate a relatively large area. The receiving module 40 may be disposed on the non-display side of the display panel 10, and the receiving module 40 may be used for receiving the reflected light that is generated by reflecting the diverged light of the diverging component 30 by the detection target. The receiving module 40 may include a module lens and a module image sensor, and the module lens and the module image sensor may be used for receiving a light signal. The display assembly may further include a processing module, and the processing module is used for processing the light signal. The stretching structure may be formed on one of the cover plate 20 and the diverging component 30, the stretching structure is located on the side of the display panel 10 in the width direction, where the width direction may be the X-axis direction, or may be the Y-axis direction, and the stretching structure may stretch the light emitted by the diverging component 30 in the width direction of the display panel 10, for example, the stretching structure may stretch the light emitted by the diverging component 30 in a width direction of the non-display area of the cover plate 20, that is, a magnification of the light in the width direction of the non-display area of the cover plate 20 is changed, and a light shape may be changed as required and the magnification is greater than 1. As shown in FIG. 3a, L in FIG. 3a represents the width of the non-display area. For example, a width of a non-display area on a mobile phone may be shown in FIG. 3b.

In the display assembly of this application, the light emitted by the emitting module to the diverging component 30 is diverged by the diverging component 30, the stretching structure stretches the light emitted by the diverging component 30 in the width direction of the display panel 10, for example, the stretching structure stretches the light emitted by the diverging component 30 in the width direction of the non-display area of the cover plate 20, a light area with a relatively large angle may be formed in the width direction of the display panel 10, the light may be diverged from the non-display area of the cover plate 20. As such, the light can be emitted without passing through the display panel 10, and loses of a light signal is then reduced, thereby improving light utilization, reducing damages to an organic light-emitting material caused when the light illuminates a display area, reducing chromatic aberration occurring in a display effect of a illumination area, and avoiding opening holes on the display panel. In addition, when the stretching structure stretches the light emitted by the diverging component 30 in the width direction of the display panel 10, for example, the stretching structure stretches the light emitted by the diverging component 30 in the width direction of the non-display area of the cover plate, a relatively large light area may be implemented in a relatively narrow non-display area, and a width of the non-display area of the cover plate may be reduced, so as to implement a relatively narrow non-display bezel and improve product use experience. In an application process, the stretching structure in this application may be used for reducing a width of a non-display area required when light is transmitted inside a mobile phone, and a width of light in a width direction of the non-display area is adjusted in a cover plate area, thereby designing a narrow black border of the mobile phone without affecting a TOF function.

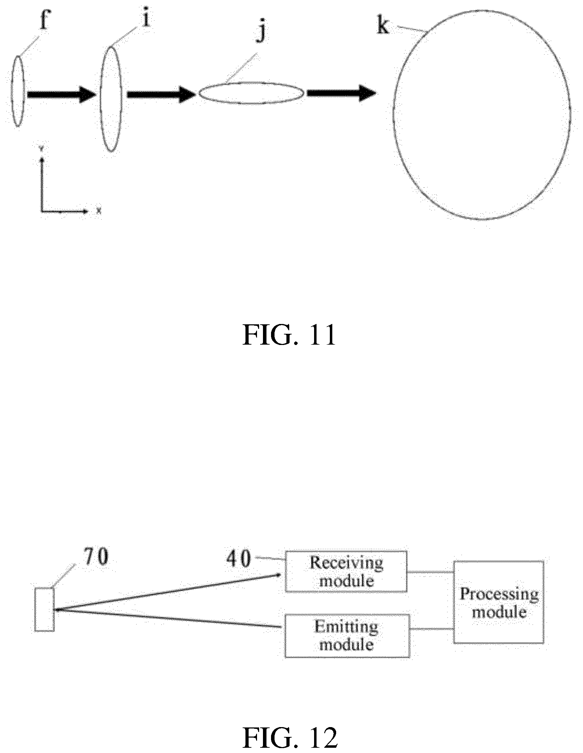

In an application process, as shown in FIG. 12, the emitting module emits modulated light, such as near-infrared light, and the light is reflected after meeting the detection target 70. The receiving module 40 may receive light reflected by the object, and the processing module may be used for calculating a time difference or phase difference between light emission and reflection and converting the time difference or phase difference into a distance to the photographed object, to generate depth information. In addition, a three-dimensional outline of the object may be represented in the form of a topographic map in which different colors indicate different distances with reference to camera photographing.

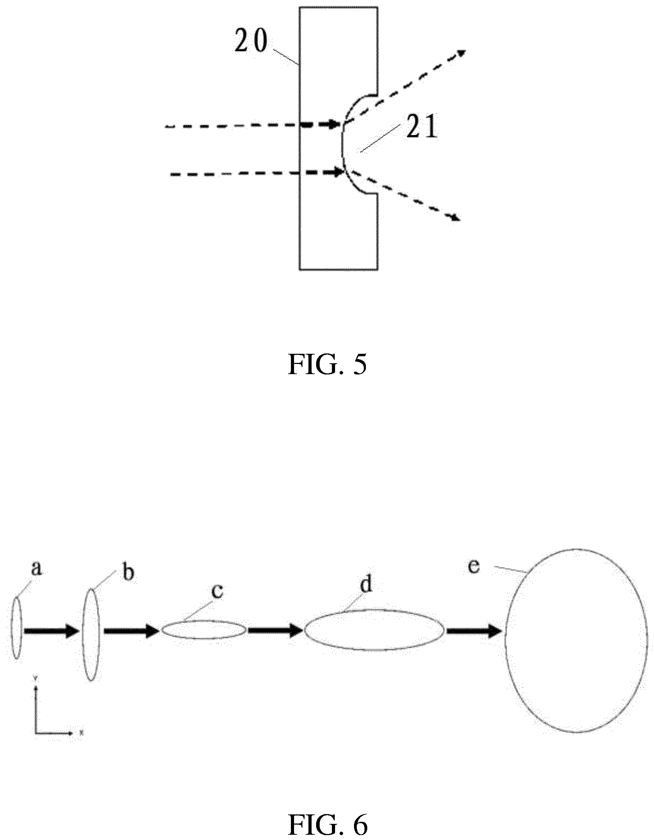

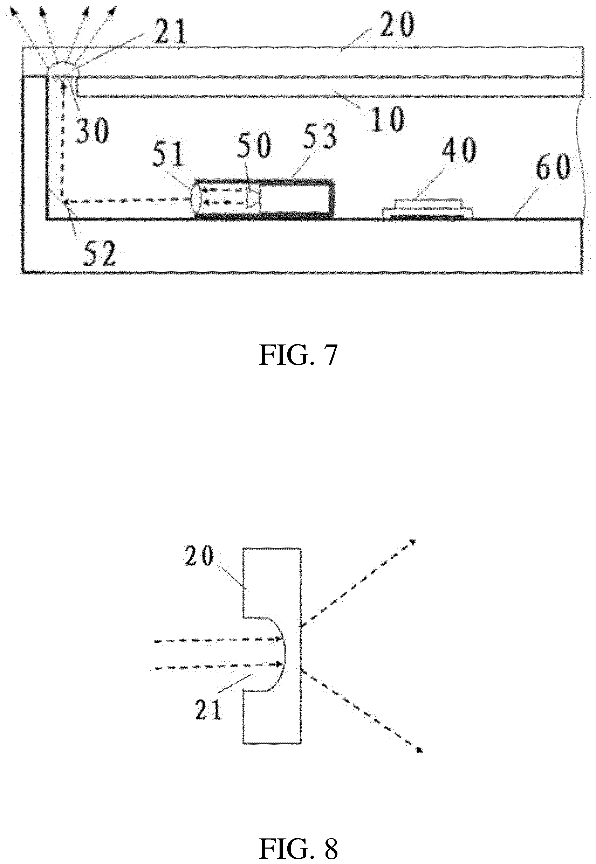

In some embodiments of this application, a first groove 21 may be disposed on the cover plate 20 to form the stretching structure, and the stretching structure may be similar to a cylindrical lens structure. A bottom wall of the first groove 21 is an arc surface, the arc surface is a concave surface, and the first groove 21 is located in a position on the cover plate 20 that corresponds to the diverging component 30. As shown in FIG. 4 and FIG. 5, the first groove 21 may be located on a side of the cover plate 20 that is distant from the display panel 10, and an opening of the first groove 21 faces away from the diverging component 30; or as shown in FIG. 7 and FIG. 8, the first groove 21 may be located on a side of the cover plate 20 that is close to the display panel 10, and an opening of the first groove 21 faces the diverging component 30. The first groove 21 may be used for forming the stretching structure on the cover plate 20, and the stretching structure may stretch the light emitted by the diverging component 30 in the width direction of the display panel 10. FIG. 6 shows light shapes of light at different positions in FIG. 4. In FIG. 4, transmission paths of the light may be sequentially a, b, c, d, and e. The light shapes of a, b, c, d, and e may be shown in FIG. 6, a is in a narrow light shape of the X direction that is emitted by a light source, b is in a collimated narrow light shape of the X direction, c is in a deflected narrow light shape of the Y direction and a short side of the light shape may be parallel with the width direction of the display panel 10, d is in a light shape diverged by the diverging component 30, and e is in a light shape stretched by the stretching structure in the Y direction. A length-width ratio of the light shape of the light a may be 3:1, and the light shape of the light a has a relatively small width in the X direction. As shown in the light shape of c, the light shape of the deflected light has a relatively small width in the Y direction, the light is stretched in the Y direction after passing through the stretching structure, the light shape of the light e has a larger width in the Y direction, a length-width ratio may be 4:3, and an area width in the Y direction is increased, where the Y direction may indicate the width direction of the non-display area of the cover plate 20. The stretching structure in this application may be used for reducing a width in the Y direction of light transmitted inside a mobile phone, and the width in the Y direction of the light shape of the light is adjusted in the cover plate area, thereby designing a narrow black border of the display assembly without affecting a TOF function.

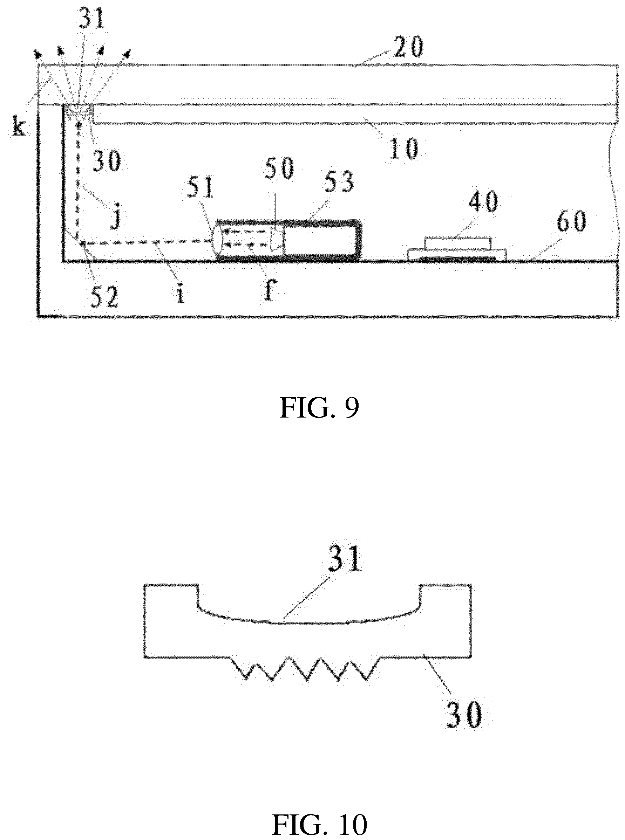

In some other embodiments of this application, as shown in FIG. 9 and FIG. 10, a second groove 31 may be disposed on a side of the diverging component 30 that is close to the cover plate 20 to form the stretching structure. A bottom wall of the second groove 31 is an arc surface, the arc surface is a concave surface, and an opening of the second groove 31 faces the cover plate 20. The second groove 31 may be used for forming the stretching structure on the diverging component 30, and the stretching structure may stretch the light emitted by the diverging component 30 in the width direction of the display panel 10, for example, the stretching structure may stretch the light emitted by the diverging component 30 in the width direction of the non-display area of the cover plate. FIG. 11 shows light shapes of light at different positions in FIG. 9. In FIG. 9, transmission paths of the light may be sequentially f, i, j, and k. The light shapes of f, i, j, and k may be shown in FIG. 11, f is in a narrow light shape of the X direction that is emitted by a light source, i is in a collimated narrow light shape of the X direction, j is in a deflected narrow light shape of a y direction and a short side of the light shape may be parallel with the width direction of the display panel 10, and k is in a light shape diverged by the diverging component 30 and stretched by the stretching structure in the y direction. A length-width ratio of the light shape of the light f may be 3:1, and the light shape of i is a light shape collimated by a light collimator 51. As shown in the light shape of j, the light shape of the deflected light has a relatively small width in the y direction, the light is stretched in the y direction after passing through the stretching structure, and an area width in the y direction is increased. After the light is diverged by the diverging component 30 and stretched, the light shape of light emitted by the cover plate 20 may be like the light shape of k, and a length-width ratio of the light shape of the light k may be 4:3.

In this embodiment of this application, the emitting module includes a light source 50 and the light collimator 51. The light source 50 may be configured to emit light, the light emitted by the light source 50 is casted to the light collimator 51, and the collimated light emitted by the light collimator 51 is casted to the diverging component 30. The light collimator 51 may be used for collimating the light, to ensure that a transmission path of the light is within a fixed area. The light source 50 may emit light, such as laser or infrared light. The light source 50 may be a vertical-cavity surface-emitting laser (Vertical-Cavity Surface-Emitting Laser, VCSEL) chip or an edge emitting laser (Edge Emitting Laser, EEL) chip. A shape of light emitted by the VCSEL chip may be a rectangle. The VCSEL chip usually generates a light spot with a relatively large area from a front vertical direction of the chip in a manner of combining area arrays, which may be shown in FIG. 2a. The EEL chip may generate an oval light shape from a lateral side of the chip, which may be specifically shown in FIG. 2b. The emitting module may generate a laser light shape with a relatively large length-width ratio, and the emitting module may be a strip-shaped VCSEL chip that generates a light shape with a relatively large length-width ratio (such as 3:1). When it is required to ensure a small width in a y direction of the generated light, the strip-shaped VCSEL chip may be used for generating a rectangular light spot with a relatively large length-width ratio similar to the edge emitting.

In this embodiment of this application, the emitting module may further include an optical structure 52. The optical structure 52 may be in the shape of a triangular prism, such as a right triangular prism. The optical structure 52 may adjust a transmission direction of the collimated light emitted by the light collimator 51, and the collimated light with an adjusted transmission direction may be casted to the diverging component 30. Through coordination among the optical structure 52, the light source 50, and the light collimator 51, the light may be emitted to the diverging component 30. The optical structure 52 may help the light source 50 and the light collimator 51 choose arrangement positions according to an actual situation, and different arrangement manners may be added.

In some embodiments of this application, the display assembly may further include a frame 60. The optical structure 52 may be disposed on the frame 60, and the cover plate 20 is connected to the frame 60. The frame 60 may be used for supporting and fixing other components in the assembly.

In some other embodiments of this application, the emitting module may further include a housing structure 53, and the light source 50 and the light collimator 51 may be encapsulated in the housing structure 53. The housing structure 53 is used for encapsulating the light source 50 and the light collimator 51 together, to achieve a relatively good integration effect, thereby ensuring accuracy of the light emitted by the light collimator 51.

In this embodiment of this application, the non-display area of the cover plate 20 may be coated with an ink layer, and the ink layer may transmit the light emitted by the emitting module. For example, the light emitted by the emitting module is infrared light, and the ink layer may transmit the infrared light, avoiding light loses caused by the ink layer.

According to an embodiment of this application, a display device is provided, and the display device includes the display assembly described in the foregoing embodiment. In the display device of this application. As such, the light can be emitted without passing through the display panel, thereby reducing loses of a light signal, improving light utilization, reducing damages to an organic light-emitting material caused when the light illuminates a display area, improving a display effect, and avoiding opening holes on the display panel. In addition, the stretching structure stretches the light emitted by the diverging component in the width direction of the display panel, so as to implement a relatively narrow non-display bezel and improve product use experience.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A display assembly, comprising:
a display panel;
a diverging component, wherein the diverging component is disposed on a side of the display panel in a width direction;
an emitting module, wherein the emitting module is disposed on a non-display side of the display panel, and the emitting module is configured to emit light to the diverging component;
a receiving module, wherein the receiving module is disposed on the non-display side of the display panel, and the receiving module is configured to receive reflected light that is generated by reflecting diverged light of the diverging component by a detection target; and
a cover plate, wherein the cover plate is disposed on a display side of the display panel, a stretching structure is formed on one of the cover plate and the diverging component, and the stretching structure is located on the side of the display panel in the width direction and configured to stretch light emitted by the diverging component in the width direction of the display panel.

2. The display assembly according to claim 1, wherein a first groove is disposed on the cover plate to form the stretching structure, a bottom wall of the first groove is an arc surface, and the first groove is located in a position on the cover plate that corresponds to the diverging component;
the first groove is disposed on a side of the cover plate away from the display panel, and an opening of the first groove faces away from the diverging component; or
the first groove is disposed on a side of the cover plate close to the display panel, and an opening of the first groove faces the diverging component.

3. The display assembly according to claim 1, wherein a second groove is disposed on a side of the diverging component close to the cover plate to form the stretching structure, a bottom wall of the second groove is an arc surface, and an opening of the second groove faces the cover plate.

4. The display assembly according to claim 1, wherein the emitting module comprises:
a light source, configured to emit light; and
a light collimator, wherein the light emitted by the light source is casted to the light collimator, and collimated light emitted by the light collimator is casted to the diverging component.

5. The display assembly according to claim 4, wherein the emitting module further comprises:
an optical structure, wherein the optical structure adjusts a transmission direction of the collimated light emitted by the light collimator, and the collimated light with an adjusted transmission direction is casted to the diverging component.

6. The display assembly according to claim 5, wherein the optical structure is triangular prism-shaped.

7. The display assembly according to claim 5, further comprising:
a frame, wherein the optical structure is disposed on the frame, and the cover plate is connected to the frame.

8. The display assembly according to claim 4, wherein the emitting module further comprises:
a housing structure, wherein the light source and the light collimator are encapsulated in the housing structure.

9. The display assembly according to claim 1, wherein a non-display area of the cover plate is coated with an ink layer, and the ink layer is capable of transmitting the light emitted by the emitting module.

10. A display device, comprising the display assembly according to any one of claims 1 to 9.
